# EUROPEAN PATENT SPECIFICATION

(11) **EP 3 219 959 B1**
(45) Date of publication and mention of the grant of the patent: **09.11.2022**
(21) Application number: 17160816.9
(22) Date of filing: 14.03.2017
(51) Int. Cl.: F02C 7/18, F02C 7/32

(54) **INTERCOOLED COOLING AIR USING EXISTING HEAT EXCHANGER**
GEKÜHLTE ZAPF-KÜHLLUFT MIT VERWENDUNG EINES BESTEHENDEN WÄRMETAUSCHERS
AIR DE REFROIDISSEMENT REFROIDI PAR ÉCHANGEUR DE CHALEUR EXISTANT

(30) Priority: 14.03.2016 US 201615069197
(43) Date of publication of application: 20.09.2017
(73) Proprietor: Raytheon Technologies Corporation, Farmington, CT 06032 (US)
(72) Inventor: DUONG, Hung, Unionville, CT Connecticut 06085 (US); SUCIU, Gabriel L., Glastonbury, CT Connecticut 06033 (US); SNAPE, Nathan, Tolland, CT Connecticut 06084 (US)
(74) Representative: Dehns

(56) References cited:
- EP-A1- 2 362 081
- EP-A1- 3 121 411
- DE-A1-102012 208 263

## Description

### BACKGROUND

This application relates to improvements in providing cooling air from a compressor section to a turbine section in a gas turbine engine.

Gas turbine engines are known and typically include a fan delivering air into a bypass duct as propulsion air. Further, the fan delivers air into a compressor section where it is compressed. The compressed air passes into a combustion section where it is mixed with fuel and ignited. Products of this combustion pass downstream over turbine rotors driving them to rotate.

It is known to provide cooling air from the compressor to the turbine section to lower the operating temperatures in the turbine section and improve overall engine operation. Typically, air from the high compressor discharge has been tapped, passed through a heat exchanger, which may sit in the bypass duct and then delivered into the turbine section. The air from the downstream most end of the compressor section is at elevated temperatures.

DE 10 2012 208263 A1 discloses a gas turbine engine as set forth in the preamble of claim 1.

EP 2 362 081 discloses a prior art bearing compartment pressurization and shaft ventilation system.

EP 3 121 411, which is prior art under Article 54(3) EPC, discloses intercooled cooling air using an existing heat exchanger.

### SUMMARY

From a first aspect, the invention provides a gas turbine engine as recited in claim 1.

Features of embodiments of the invention are set forth in the dependent claims.

These and other features may be best understood from the following drawings and specification.

### BRIEF DESCRIPTION OF THE DRAWINGS

Figure 1 schematically shows an embodiment of a gas turbine engine.
Figure 2 shows a prior art engine.
Figure 3 shows one example engine.
Figure 4 is a graph illustrating increasing temperatures of a tapped air against the work required.
Figure 5 shows a detail of an example of an engine.
Figure 6 shows a further detail of the example engine of Figure 5.

### DETAILED DESCRIPTION

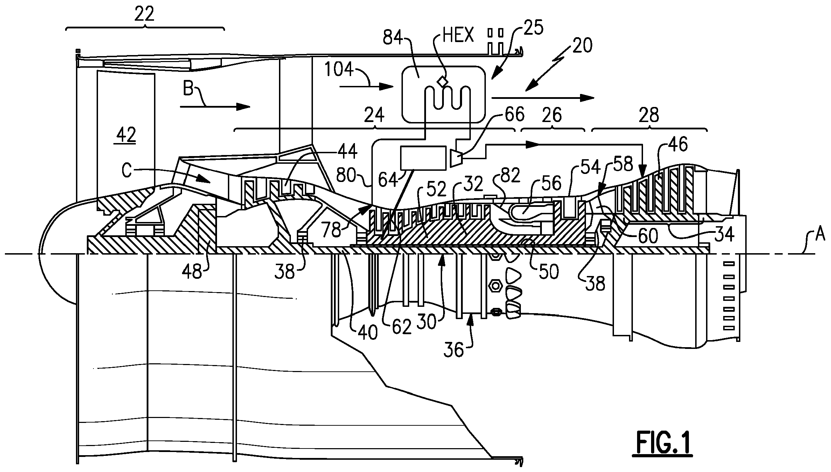

Figure 1 schematically illustrates an example gas turbine engine 20 that includes a fan section 22, a compressor section 24, a combustor section 26 and a turbine section 28. Alternative engines might include an augmenter section (not shown) among other systems or features. The fan section 22 drives air along a bypass flow path B while the compressor section 24 draws air in along a core flow path C where air is compressed and communicated to a combustor section 26. In the combustor section 26, air is mixed with fuel and ignited to generate a high pressure exhaust gas stream that expands through the turbine section 28 where energy is extracted and utilized to drive the fan section 22 and the compressor section 24.

Although the disclosed non-limiting embodiment depicts a turbofan gas turbine engine, it should be understood that the concepts described herein are not limited to use with turbofans as the teachings may be applied to other types of turbine engines; for example a turbine engine including a three-spool architecture in which three spools concentrically rotate about a common axis and where a low spool enables a low pressure turbine to drive a fan via a gearbox, an intermediate spool that enables an intermediate pressure turbine to drive a first compressor of the compressor section, and a high spool that enables a high pressure turbine to drive a high pressure compressor of the compressor section.

The example engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided.

The low speed spool 30 generally includes an inner shaft 40 that connects a fan 42 and a low pressure (or first) compressor section 44 to a low pressure (or first) turbine section 46. The inner shaft 40 drives the fan 42 through a speed change device, such as a geared architecture 48, to drive the fan 42 at a lower speed than the low speed spool 30. The high-speed spool 32 includes an outer shaft 50 that interconnects a high pressure (or second) compressor section 52 and a high pressure (or second) turbine section 54. The inner shaft 40 and the outer shaft 50 are concentric and rotate via the bearing systems 38 about the engine central longitudinal axis A.

A combustor 56 is arranged between the high pressure compressor 52 and the high pressure turbine 54. In one example, the high pressure turbine 54 includes at least two stages to provide a double stage high pressure turbine 54. In another example, the high pressure turbine 54 includes only a single stage. As used herein, a "high pressure" compressor or turbine experiences a higher pressure than a corresponding "low pressure" compressor or turbine.

The example low pressure turbine 46 has a pressure ratio that is greater than about 5. The pressure ratio of the example low pressure turbine 46 is measured prior to an inlet of the low pressure turbine 46 as related to the pressure measured at the outlet of the low pressure turbine 46 prior to an exhaust nozzle.

A mid-turbine frame 58 of the engine static structure 36 is arranged generally between the high pressure turbine 54 and the low pressure turbine 46. The mid-turbine frame 58 further supports bearing systems 38 in the turbine section 28 as well as setting airflow entering the low pressure turbine 46.

Airflow through the core airflow path C is compressed by the low pressure compressor 44 then by the high pressure compressor 52 mixed with fuel and ignited in the combustor 56 to produce high speed exhaust gases that are then expanded through the high pressure turbine 54 and low pressure turbine 46. The mid-turbine frame 58 includes vanes 60, which are in the core airflow path and function as an inlet guide vane for the low pressure turbine 46. Utilizing the vane 60 of the mid-turbine frame 58 as the inlet guide vane for low pressure turbine 46 decreases the length of the low pressure turbine 46 without increasing the axial length of the mid-turbine frame 58. Reducing or eliminating the number of vanes in the low pressure turbine 46 shortens the axial length of the turbine section 28. Thus, the compactness of the gas turbine engine 20 is increased and a higher power density may be achieved.

The disclosed gas turbine engine 20 in one example is a high-bypass geared aircraft engine. In a further example, the gas turbine engine 20 includes a bypass ratio greater than about six, with an example embodiment being greater than about ten. The example geared architecture 48 is an epicyclical gear train, such as a planetary gear system, star gear system or other known gear system, with a gear reduction ratio of greater than about 2.3.

In one disclosed embodiment, the gas turbine engine 20 includes a bypass ratio greater than about ten and the fan diameter is significantly larger than an outer diameter of the low pressure compressor 44. It should be understood, however, that the above parameters are only exemplary of one embodiment of a gas turbine engine including a geared architecture and that the present disclosure is applicable to other gas turbine engines.

A significant amount of thrust is provided by airflow through a bypass flow path B due to the high bypass ratio. The fan section 22 of the engine 20 is designed for a particular flight condition -- typically cruise at about 0.8 Mach and about 35,000 feet (10,668 metres). The flight condition of 0.8 Mach and 35,000 ft. (10,668 m), with the engine at its best fuel consumption - also known as "bucket cruise Thrust Specific Fuel Consumption ('TSFC')" - is the industry standard parameter of pound-mass (lbm) of fuel per hour being burned divided by pound-force (lbf) of thrust the engine produces at that minimum point.

"Low fan pressure ratio" is the pressure ratio across the fan blade alone, without a Fan Exit Guide Vane ("FEGV") system. The low fan pressure ratio as disclosed herein according to one non-limiting embodiment is less than about 1.50. In another non-limiting embodiment the low fan pressure ratio is less than about 1.45.

"Low corrected fan tip speed" is the actual fan tip speed in ft/sec divided by an industry standard temperature correction of [(Tram °R)/(518.7°R)]^{0.5} (where °R = K x 9/5). The "Low corrected fan tip speed", as disclosed herein according to one non-limiting embodiment, is less than about 1150 ft/second (351 m/s).

The example gas turbine engine includes the fan 42 that comprises in one non-limiting embodiment less than about 26 fan blades. In another non-limiting embodiment, the fan section 22 includes less than about 20 fan blades. Moreover, in one disclosed embodiment the low pressure turbine 46 includes no more than about 6 turbine rotors schematically indicated at 34. In another non-limiting example embodiment the low pressure turbine 46 includes about 3 turbine rotors. A ratio between the number of fan blades 42 and the number of low pressure turbine rotors is between about 3.3 and about 8.6. The example low pressure turbine 46 provides the driving power to rotate the fan section 22 and therefore the relationship between the number of turbine rotors 34 in the low pressure turbine 46 and the number of blades 42 in the fan section 22 disclose an example gas turbine engine 20 with increased power transfer efficiency.

Gas turbine engine designs are seeking to increase overall efficiency by generating higher overall pressure ratios. By achieving higher overall pressure ratios, increased levels of performance and efficiency may be achieved. However, challenges are raised in that the parts and components associated with a high pressure turbine require additional cooling air as the overall pressure ratio increases.

The example engine 20 utilizes air bleed 80 from upstream locations 78 of the compressor section 24 for use in cooling portions of the turbine section 28. The upstream locations 78 provide tapped airflow from a location upstream of a discharge 82 of the compressor section 24. The tapped airflow passes through a heat exchanger 84 to cool the cooling air provided to the turbine section 28. The air passing through heat exchanger 84 is cooled by airflow through the bypass flow path B. That is, heat exchanger 84 is positioned in the path of bypass airflow through the bypass flow path B. Cooling air from the heat exchanger 84 is then pressurized in a cooling compressor 66 mounted to an accessory gearbox 64. The accessory gearbox 64 is driven by a tower shaft 62 that is in turn driven by the high-speed spool 32.

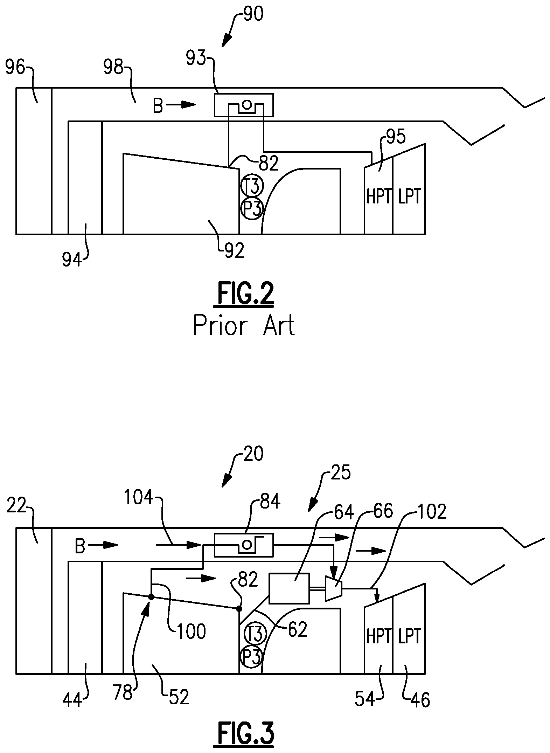

A prior art approach to providing cooling air is illustrated in Figure 2. An engine 90 incorporates a high pressure compressor 92 downstream of the low pressure compressor 94. A fan 96 delivers air into a bypass duct 98 and into the low pressure compressor 94. The discharge 82 of the high pressure compressor 92 provides bleed air into a heat exchanger 93. The heat exchanger 93 is in the path of bypass air flowing through the bypass duct 98. Airflow from the discharge 82 is cooled in the heat exchanger 93 and delivered into a high pressure turbine 95.

The discharge 82 of the high pressure compressor 92 is known as station 3. The temperature T3 and pressure P3 are both very high.

In future engines, T3 levels are expected to approach greater than or equal to 1350°F (732°C). Current heat exchanger technology is becoming a limiting factor as they are made of materials, manufacturing, and design capability which have difficulty receiving such high temperature and pressure levels.

Figure 3 is a schematic view of the example engine 20 that is within the scope of this disclosure. The fan section 22 may deliver airflow 104 through the bypass flow path B and into the low pressure compressor 44. The high pressure compressor 52 is positioned downstream of the low pressure compressor 44. An outlet, referred to as a tap 100 is disposed at one of the upstream locations 78 axially forward of the discharge 82. The example tap 100 is disposed at an upstream location within the high pressure compressor 52. Airflow obtained at the tap 100 is at a temperature and pressure much lower than T3/P3 at the discharge 82. Airflow from the tap 100 passes through the heat exchanger 84. The heat exchanger 84 is positioned to receive airflow 104 through the bypass flow path B. Airflow exiting the heat exchanger 84 flows through an inlet passage 106 to the cooling compressor 66. The cooling compressor 66 is mounted to the accessory gearbox 64 and increases the pressure of the reduced temperature airflow to a pressure desired for injection into the high pressure turbine 54. Airflow from the compressor is directed through conduit 102 to the high pressure turbine 54.

Since the air tapped at tap 100 is at much lower pressures and temperatures than the air tapped at the discharge location shown in prior art Figure 2, currently available heat exchanger materials and technology may be utilized. Air from the tap 100 is compressed by the cooling compressor 66 to a higher pressure level such that the airflow is compatible with the pressures within the high pressure turbine 54. The cooling compressor 66 is driven through the accessory gearbox 64 that is in turn driven by the tower shaft 62. The tower shaft 62 is driven through a mechanical gear linkage with the higher-speed spool 32.

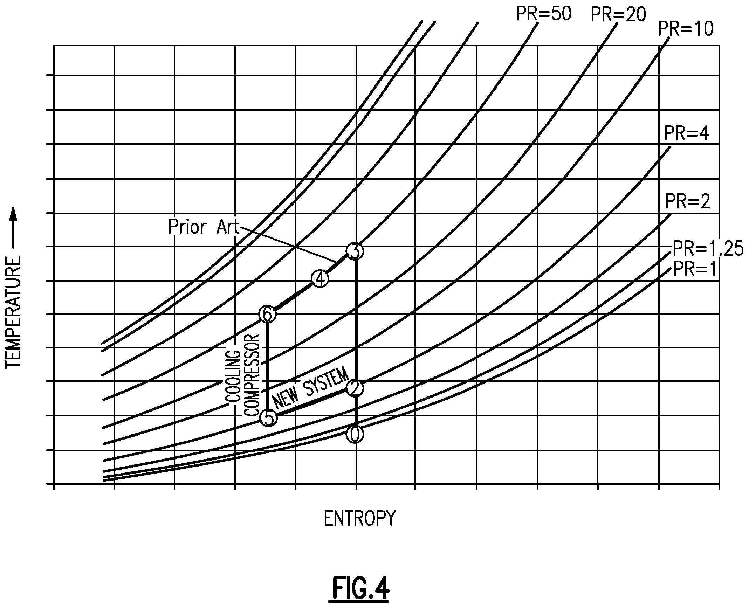

Referring to Figure 4, a temperature/entropy diagram illustrates that a lower level of energy is spent to compress air of a lower temperature to the desired P3 pressure level. Cooler air requires less work to compress when compared to warmer air. Accordingly, the work required to raise the pressure of the air drawn from an early stage of the compressor section 24 is less than if the air were compressed to the desired pressure within the compressor section. Therefore, high pressure air at P3 levels or higher can be obtained at significantly lower temperatures than T3. As shown in Figure 4, to reach a particular pressure ratio, 50 for example, the prior system would increases pressure as shown from point 2 to point 3, with a dramatic increase in temperature. The disclosed intercooling system provides a reduction in air temperature as shown between point 2 and point 5 as the air is cooled through the heat exchanger. The cooled air from the heat exchanger is then provided to the cooling compressor to increase pressure from point 5 to point 6. Point 6 is at a lower temperature than point 3, while providing the same pressure.

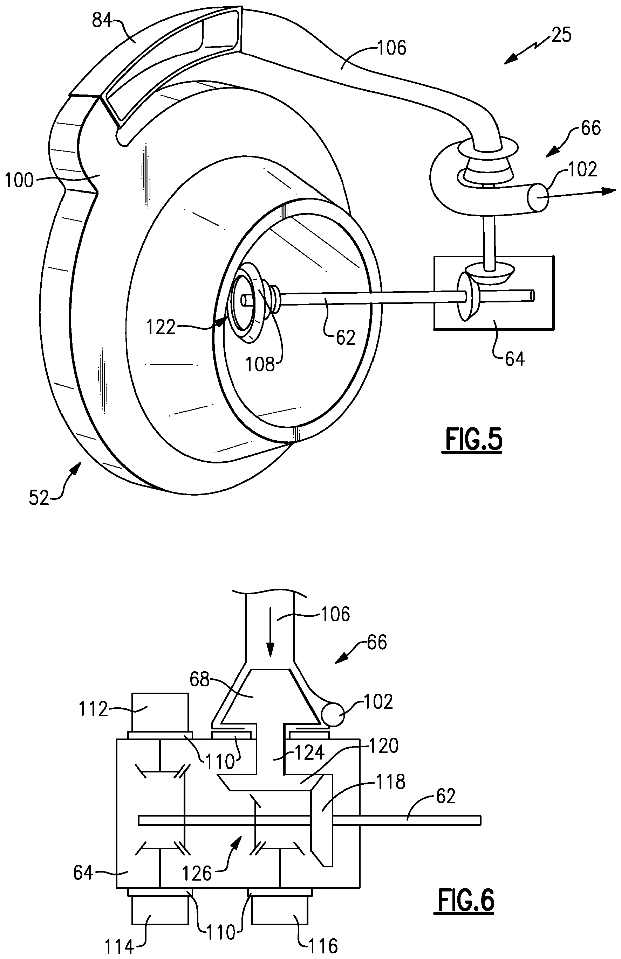

Figure 5 is a schematic illustration of the example intercooling system 25 including the cooling compressor 66 driven by through the accessory gearbox 64. The cooling compressor 66 receives airflow through the outlet 106 and outputs compressed air through the conduit 102 to the high pressure compressor 52. The tower shaft 62 includes a gear 108 engaged to a gear interface 122 of the high pressure compressor 52. It should be understood that the tower shaft 62 may be driven by a shaft, rotor or other structure of the higher-speed spool 32. In this example, the gear interface 122 is within the high pressure compressor 52, however other locations for the tower shaft gear interface 122 are within the contemplation of this disclosure.

Referring to Figure 6, the example accessory gearbox 64 includes pads 110 for mounting of accessory components that are then driven by a gearing supported within the gearbox 64. In this example, the cooling compressor 66 is mounted to the accessory gearbox 64 such that no additional shafts from the engine core are needed. The accessory gearbox 64 includes a gear train 126 for driving one of several accessory components schematically shown at 112, 114 and 116. The example accessory components 112, 114 and 116 may include a fuel pump, oil pump and/or a generator. Moreover, the accessory gearbox 64 may drive other components that are utilized for operation of the gas turbine engine 20.

The example cooling compressor 66 includes a centrifugal impeller 68 that is turned by shaft 124. The shaft 124 supports a gear 120 that is driven by gear 118 mounted to the tower shaft 62. A gear ratio between the gear 120 and gear 118 provides a multiplier such that the impeller 68 of the cooling compressor 66 rotates at a speed different than the tower shaft 62 such that the impeller 68 may operate at an optimal speed. In one example, the impeller 68 rotates at a speed greater than that of the tower shaft 62. In one example, the gear ratio may be within a range of between 5:1 and 8:1, and in another embodiment gear ratio may be 6:1.

Details of the engine, as set forth above, may be found in co-pending U.S. Patent Application Serial No. 14/695,578.

Although an example embodiment has been disclosed, a worker of ordinary skill in this art would recognize that certain modifications would come within the scope of this disclosure. For that reason, the following claims should be studied to determine the scope and content of this disclosure.

## Claims

1. A gas turbine engine (20) comprising:
a main compressor section (24) having a high pressure compressor (52) with a downstream discharge (82), and more upstream locations (78);
a turbine section (28) having a high pressure turbine (54);
an accessory gearbox (64);
a tower shaft (62) configured to be driven by the main compressor section (24), the tower shaft (62) configured to drive the accessory gearbox (64); and
an intercooling system (25) comprising:
a shaft (124);
a cooling compressor (66) mounted to the accessory gearbox (64); and
a heat exchanger (84) for cooling air drawn from a portion of the main compressor section (24) at a first temperature and pressure to a second temperature cooler than the first temperature, the cooling compressor (66) configured to compress air communicated from the heat exchanger (84) to a second pressure greater than the first pressure and configured to communicate the compressed air to a portion of the turbine section (28), and the accessory gearbox (64) configured to drive at least one component (112, 114, 116) different than cooling compressor (66) and includes pads (110) defining mounting locations for accessory components (112, 114, 116), and the cooling compressor (66) is mounted to one of the pads (110) of the accessory gearbox (64), the accessory gear box (64) configured to drive the cooling compressor (66);
**characterised in that**:
the intercooling system (25) further comprises a tap (100) configured to tap air from at least one of the more upstream locations (78) in the main compressor section (24) and pass the tapped air through the heat exchanger (84) and then to the cooling compressor (66); and
the cooling compressor (66) includes a centrifugal compressor impeller (68) that is turned by the shaft (124), wherein the shaft (124) supports a first gear (120) that is driven by a second gear (118) mounted to the tower shaft (62).

2. The gas turbine engine (20) as set forth in claim 1, wherein the tower shaft (62) is configured to be driven by the high pressure compressor section (52).

3. The gas turbine engine (20) as set forth in claim 1 or 2, wherein the at least one component (112, 114, 116) different than the cooling compressor (66) comprises one of a fuel pump, oil pump and generator.

4. The gas turbine engine (20) as set forth in any preceding claim, wherein the accessory gearbox (64) includes a gear ratio such that the impeller (68) of the cooling compressor (66) is configured to rotate at a speed different than the tower shaft (62).

5. The gas turbine engine (20) as set forth in any preceding claim, wherein an air temperature (T3) at the downstream discharge (82) of the high pressure compressor (52) is greater than or equal to about 1350°F (732°C).

6. The gas turbine engine (20) as set forth in any preceding claim, wherein cooling air output from the cooling compressor (66) is delivered into the high pressure turbine (54).

7. The gas turbine engine (20) as set forth in any preceding claim, wherein the tap (100) comprises an outlet from the high pressure compressor (52) through which airflow is directed to the heat exchanger (84).

8. The gas turbine engine as set forth in any preceding claim, including a main fan (22, 42) configured to deliver bypass air (104) into a bypass duct and into the main compressor section (24) with the heat exchanger (84) positioned within the bypass duct for cooling air tapped from the main compressor section (24).

## Patentansprüche

1. Gasturbinentriebwerk (20), umfassend:
einen Hauptkompressorabschnitt (24) mit einem Hochdruckkompressor (52) mit einem stromabwärtigen Auslass (82) und mehr stromaufwärtigen Stellen (78);
einen Turbinenabschnitt (28) mit einer Hochdruckturbine (54);
ein Hilfsgetriebe (64);
eine Turmwelle (62), die konfiguriert ist, um von dem Hauptkompressorabschnitt (24) angetrieben zu werden, wobei die Turmwelle (62) konfiguriert ist, um das Hilfsgetriebe (64) anzutreiben; und
ein Zwischenkühlsystem (25), umfassend:
eine Welle (124);
einen Kühlkompressor (66), der an dem Hilfsgetriebe (64) montiert ist; und
einen Wärmetauscher (84) zum Kühlen von Luft, die von einem Teil des Hauptkompressorabschnitts (24) bei einer ersten Temperatur und einem ersten Druck auf eine zweite Temperatur abgezogen wird, die kühler als die erste Temperatur ist, wobei der Kühlkompressor (66) dazu konfiguriert ist, Luft zu komprimieren, die von dem Wärmetauscher (84) auf einen zweiten Druck übertragen wird, der größer als der erste Druck ist und konfiguriert ist, um die komprimierte Luft zu einem Teil des Turbinenabschnitts (28) zu übertragen, und das Hilfsgetriebe (64) konfiguriert ist, mindestens eine Komponente (112, 114, 116) anzutreiben, anders als der Kühlkompressor (66) und Pads (110) umfasst, die Montagestellen für Hilfskomponenten (112, 114, 116) definieren, und der Kühlkompressor (66) an einem der Pads (110) des Hilfsgetriebes (64) montiert ist, wobei das Hilfsgetriebe (64) konfiguriert ist, um den Kühlkompressor (66) anzutreiben;
**dadurch gekennzeichnet, dass**:
das Zwischenkühlsystem (25) ferner einen Zapfhahn (100) umfasst,
der konfiguriert ist, um Luft von mindestens einer der weiter stromaufwärts gelegenen Stellen (78) in dem Hauptkompressorabschnitt (24) abzuzapfen und die abgezapfte Luft durch den Wärmetauscher (84) zu leiten, und dann zum Kühlkompressor (66); und
der Kühlkompressor (66) ein Zentrifugalkompressorlaufrad (68) enthält, das von der Welle (124) gedreht wird, wobei die Welle (124) ein erstes Zahnrad (120) trägt, das von einem zweiten Zahnrad (118) angetrieben wird, das an der Turmwelle (62) montiert ist.

2. Gasturbinentriebwerk (20) nach Anspruch 1, wobei die Turmwelle (62) konfiguriert ist, um durch den Hochdruckkompressorabschnitt (52) angetrieben zu werden.

3. Gasturbinentriebwerk (20) nach Anspruch 1 oder 2, wobei die mindestens eine Komponente (112, 114, 116), die sich von dem Kühlkompressor (66) unterscheidet, einen von einer Kraftstoffpumpe, einer Ölpumpe und einem Generator umfasst.

4. Gasturbinentriebwerk (20) nach einem der vorhergehenden Ansprüche, wobei das Hilfsgetriebe (64) ein Übersetzungsverhältnis enthält, so dass das Laufrad (68) des Kühlkompressors (66) so konfiguriert ist, dass es sich mit einer anderen Drehzahl als die Turmwelle (62) dreht.

5. Gasturbinentriebwerk (20) nach einem der vorhergehenden Ansprüche, wobei eine Lufttemperatur (T3) am stromabwärtigen Auslass (82) des Hochdruckkompressors (52) größer oder gleich etwa 1350°F (732°C) ist.

6. Gasturbinentriebwerk (20) nach einem der vorhergehenden Ansprüche, wobei Kühlluft, die von dem Kühlkompressor (66) ausgegeben wird, in die Hochdruckturbine (54) geliefert wird.

7. Gasturbinentriebwerk (20) nach einem der vorhergehenden Ansprüche, wobei der Zapfhahn (100) einen Auslass von dem Hochdruckkompressor (52) umfasst, durch den eine Luftströmung zu dem Wärmetauscher (84) geleitet wird.

8. Gasturbinentriebwerk nach einem der vorhergehenden Ansprüche, die einen Hauptlüfter (22, 42) enthält, der so konfiguriert ist, dass er Umgehungsluft (104) in einen Umgehungskanal und in den Hauptkompressorabschnitt (24) mit dem Wärmetauscher (84), der innerhalb des Umgehungskanals zum Kühlen von Luft, die von dem Hauptkompressorabschnitt (24) abgezapft wird, positioniert ist, liefert.

## Revendications

1. Moteur à turbine à gaz (20) comprenant :
une section de compresseur principale (24) ayant un compresseur haute pression (52) avec une évacuation aval (82), et plusieurs emplacements amont (78) ;
une section de turbine (28) ayant une turbine haute pression (54) ;
un boîtier d'entraînement des accessoires (64) ;
un arbre de tour (62) configuré pour être entraîné par la section de compresseur principale (24), l'arbre de tour (62) étant configuré pour entraîner le boîtier d'entraînement des accessoires (64) ; et
un système de refroidissement intermédiaire (25) comprenant :
un arbre (124) ;
un compresseur de refroidissement (66) monté sur le boîtier d'entraînement des accessoires (64) ; et
un échangeur de chaleur (84) pour refroidir l'air aspiré d'une partie de la section de compresseur principale (24) à une première température et pression vers une seconde température plus froide que la première température, le compresseur de refroidissement (66) étant configuré pour comprimer l'air communiqué depuis l'échangeur de chaleur (84) vers une seconde pression supérieure à la première pression et configuré pour communiquer l'air comprimé à une partie de la section de turbine (28), et le boîtier d'entraînement des accessoires (64) étant configuré pour entraîner au moins un composant (112, 114, 116) différent du compresseur de refroidissement (66) et comporte des coussinets (110) définissant des emplacements de montage pour les composants accessoires (112, 114, 116), et le compresseur de refroidissement (66) est monté sur l'un des coussinets (110) du boîtier d'entraînement des accessoires (64), le boîtier d'entraînement des accessoires (64) étant configuré pour entraîner le compresseur de refroidissement (66) ;
**caractérisé en ce que** :
le système de refroidissement intermédiaire (25) comprend en outre un robinet (100) configuré pour prélever de l'air à partir d'au moins l'un des emplacements les plus en amont (78) dans la section de compresseur principale (24) et faire passer l'air prélevé à travers l'échangeur de chaleur (84) et puis vers le compresseur de refroidissement (66) ; et
le compresseur de refroidissement (66) comporte une roue de compresseur centrifuge (68) qui est entraînée en rotation par l'arbre (124), dans lequel l'arbre (124) supporte un premier engrenage (120) qui est entraîné par un second engrenage (118) monté sur l'arbre de tour (62).

2. Moteur à turbine à gaz (20) selon la revendication 1, dans lequel l'arbre de tour (62) est configuré pour être entraîné par la section de compresseur haute pression (52).

3. Moteur à turbine à gaz (20) selon la revendication 1 ou 2, dans lequel l'au moins un composant (112, 114, 116) différent du compresseur de refroidissement (66) comprend l'un parmi une pompe à carburant, une pompe à huile et un générateur.

4. Moteur à turbine à gaz (20) selon une quelconque revendication précédente, dans lequel le boîtier d'entraînement des accessoires (64) comporte un rapport d'engrenage de sorte que la roue (68) du compresseur de refroidissement (66) est configurée pour tourner à une vitesse différente de celle de l'arbre de tour (62).

5. Moteur à turbine à gaz (20) selon une quelconque revendication précédente, dans lequel une température de l'air (T3) au niveau de l'évacuation aval (82) du compresseur haute pression (52) est supérieure ou égale à environ 1 350 °F (732 °C).

6. Moteur à turbine à gaz (20) selon une quelconque revendication précédente, dans lequel l'air de refroidissement sortant du compresseur de refroidissement (66) est délivré dans la turbine haute pression (54).

7. Moteur à turbine à gaz (20) selon une quelconque revendication précédente, dans lequel le robinet (100) comprend une sortie du compresseur haute pression (52) à travers laquelle l'écoulement d'air est dirigé vers l'échangeur de chaleur (84).

8. Moteur à turbine à gaz selon une quelconque revendication précédente, comportant un ventilateur principal (22, 42) configuré pour fournir de l'air de dérivation (104) dans un conduit de dérivation et dans la section de compresseur principale (24) avec l'échangeur de chaleur (84) positionné à l'intérieur du conduit de dérivation pour refroidir l'air prélevé sur la section de compresseur principale (24).
